# EUROPÄISCHE PATENTSCHRIFT

(11) **EP 4 478 919 B1**
(45) Veröffentlichungstag und Bekanntmachung des Hinweises auf die Patenterteilung: **08.04.2026**
(21) Anmeldenummer: 22823398.7
(22) Anmeldetag: 29.11.2022
(51) Int. Cl.: A47J 31/44

(54) **DAMPFLANZE FÜR EINE KAFFEEMASCHINE**
STEAM WAND FOR A COFFEE MACHINE
BEC À VAPEUR POUR MACHINE À CAFÉ

(30) Priorität: 15.02.2022 DE 102022103537
(43) Veröffentlichungstag der Anmeldung: 25.12.2024
(73) Patentinhaber: Next Level Coffee GmbH, 78464 Konstanz (DE)
(72) Erfinder: KÜTEMEYER, Marius, 70193 Stuttgart (DE); MAIER, Dominik, 78464 Konstanz (DE); UNGER, Markus, 78462 Konstanz (DE)
(74) Vertreter: LKGLOBAL Partnerschaftsgesellschaft mbB
(86) Internationale Anmeldenummer: PCT/EP2022/083691
(87) Internationale Veröffentlichungsnummer: WO 2023/156038

(56) Entgegenhaltungen:
- WO-A1-2021/074829
- US-A- 5 233 915
- US-A1- 2018 353 001
- US-B2- 9 560 931

## Beschreibung

### Technisches Gebiet

Die Beschreibung betrifft eine Dampflanze für eine Kaffeemaschine, eine Kaffeemaschine mit einer solchen Dampflanze sowie ein System bestehend aus einer Kaffeemaschine und einem Flüssigkeitsbehälter.

### Technischer Hintergrund

Kaffeemaschinen existieren in verschiedenen Formen und Kategorien. Üblicherweise werden Kaffeemaschinen genutzt, um ein Kaffeegetränk durch einen Brühvorgang herzustellen. Nach dem Brühvorgang liegt das Kaffeegetränk als Getränk vor, in welchem üblicherweise mit heißem Wasser Aroma und Geschmack aus Kaffeepulver extrahiert wurde. Das Kaffeegetränk kann nun entweder in dieser Form getrunken werden oder es wird durch weitere Zutaten erweitert, wie beispielsweise Zucker oder andere Süßungsmittel, aromatisierte Zusätze, sowie Milch oder Milchersatzflüssigkeiten.

Milch oder Milchersatzflüssigkeiten können dem Kaffeegetränk in ihrer ursprünglichen Form zugegeben werden. Häufig jedoch wird Milch oder eine Milchersatzflüssigkeit mit einem sogenannten Schäumer zu einem Schaum aufbereitet und dann dem Kaffeegetränk zugegeben oder das Kaffeegetränk wird dem aufbereiteten Schaum zugegeben.

In diesem Zusammenhang wird häufig Milch tierischen Ursprungs verwendet. Es ist aber auch denkbar, Milchersatzflüssigkeiten pflanzlichen Ursprungs zu verwenden. Solche Milchersatzflüssigkeiten können beispielsweise aus Erbsen, Lupinen, Hafer, Hanf, Mandeln, Reis, Soja, etc. hergestellt werden. Aus Gründen der besseren Lesbarkeit wird im Kontext dieser Beschreibung oftmals auf Milch Bezug genommen. Es ist jedoch zu verstehen, dass mit der Bezugnahme auf Milch stets eine als Kaffeezusatz verwendbare schäumende Flüssigkeit tierischen oder pflanzlichen Ursprungs gemeint ist.

Für die Herstellung von Milchschaum sind verschiedene Techniken bekannt. Beispielsweise kann ein Element mit unregelmäßiger Oberflächenstruktur in der Milch in Bewegung oder Rotation versetzt werden, wodurch die Milch aufgrund ihrer Zusammensetzung (insbesondere ihres Gehalts an Fett und Eiweiß) geschäumt wird. Alternativ kann die Milch mit einem unter Druck stehenden Fluid oder Gas wie Dampf oder einem Dampf-Luft-Gemisch geschäumt werden, indem dieses Fluid oder Gas mit entsprechendem Druck in die in einem Behälter befindliche Milch eingebracht wird. Bei diesem zweiten Ansatz wird eine sogenannte Dampflanze verwendet, um das Fluid oder Gas in die Milch einzubringen. Um mit einer Dampflanze einen qualitativ hochwertigen Milchschaum zu erzeugen, ist mitunter Geschick und Erfahrung der herstellenden Person nötig. Die Herstellung von Milchschaum mit einer Dampflanze erfolgt üblicherweise in zwei Phasen: in einer ersten Phase wird die Dampflanze oder der Behälter mit Milch so gehalten, dass die Dampflanze nahe an der Oberfläche der Milch ist und dadurch etwas Luft von der Oberfläche eingesaugt und in die Milch eingebracht wird; ab einer bestimmten Milchtemperatur wird die Dampflanze tiefer in die Milch eingetaucht, so dass in dieser zweiten Phase die Milch im Wesentlichen ohne Zuführung weiterer Luft gewirbelt wird.

US 2018/353001 A1 beschreibt eine Dampflanze mit Dampfauslassöffnungen an einer lateralen Mantelfläche. Die Dampflanze weist einen im Wesentlichen zylinderförmigen Körper auf. An einem Ende befinden sich Einlassöffnungen, welche jeweils über eine Leitung mit einer der Dampfauslassöffnungen verbunden sind. An der Stirnseite ist eine Stufe mit zwei senkrecht zueinander angeordneten Flächen vorgesehen. An den Flächen sind die Dampfauslassöffnungen in Form von Düsen angeordnet, so dass die beiden austretenden Dampfstrahlen einander kreuzen.

WO 2021/074829 A1 beschreibt eine Dampflanze mit Dampfauslassöffnungen. Die Dampfauslassöffnungen sind in einem konisch verlaufenden Endabschnitt der Dampflanze angeordnet, so dass die Dampfauslassöffnungen den Dampf sternförmig und geradlinig weg von der Dampflanze abgeben.

### Beschreibung

Es kann als Aufgabe betrachtet werden, die Herstellung von qualitativ hochwertigem Milchschaum mittels einer Dampflanze zu verbessern.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß der Erfindung weist eine Dampflanze für eine Kaffeemaschine einen stabartigen Lanzenkörper und einen Auslassbereich zum Auslassen von Dampf und/oder Luft aus einem Inneren des Lanzenkörpers in eine Umgebung des Lanzenkörpers auf. Der Auslassbereich ist an einer Mantelfläche des Lanzenkörpers angeordnet und ist ausgestaltet, den Dampf und/oder die Luft so auszulassen, dass der Dampf und/oder die Luft eine Strömung bildet, welche in Bezug auf den Lanzenkörper eine tangentiale Strömungsrichtung hat und tangential aus dem Lanzenkörper strömt. Die Mantelfläche ist in Umfangsrichtung des Lanzenkörpers gekrümmt. Der Auslassbereich ist so ausgestaltet, dass die Strömungsrichtung des Dampfes und/oder der Luft senkrecht zu einer Längsachse oder Erstreckungsrichtung in Längsrichtung des Lanzenkörpers mindestens abschnittsweise entlang der Mantelfläche verläuft. Der Auslassbereich ist so ausgestaltet, dass die von dem Dampf und/oder der Luft gebildete Strömung mindestens abschnittsweise um den Lanzenkörper strömt und mindestens teilweise und abschnittsweise einem Krümmungsverlauf der Mantelfläche in Umfangsrichtung folgt.

Die Dampflanze ist üblicherweise mit der Kaffeemaschine oder einer Quelle für ein unter Druck stehendes Fluid (Dampf und/oder Luft) verbunden. Zu diesem Zweck weist die Kaffeemaschine oder die besagte Quelle einen Wasserbehälter mit einem Heizelement und eine Pumpe auf. Die Pumpe befördert das Fluid zu der Dampflanze, wo das Fluid mit einer entsprechenden Geschwindigkeit austritt.

Die Dampflanze ist beispielsweise rohrförmig oder stabartig ausgestaltet. Üblicherweise weist die Dampflanze einen länglich oder linear verlaufenden Endabschnitt auf, mit dem die Dampflanze in die zu schäumende Milch eingetaucht wird. Die Dampflanze kann an einem Gehäuse der Kaffeemaschine bewegbar, schwenkbar oder drehbar angeordnet sein, damit ein Behälter mit Milch unter der Dampflanze platziert und die Dampflanze in die Milch eingetaucht werden kann.

Bei der hier beschriebenen Dampflanze ist der Auslassbereich für Dampf und/oder Luft an einer Mantelfläche des Lanzenkörpers angeordnet. Auch ist der Auslassbereich so gestaltet, dass der Dampf und/oder die Luft den Auslassbereich so verlässt, dass die erzeugte Strömung eine tangentiale Strömungsrichtung hat. Der Dampf und/oder die Luft wird also weder aus einer Stirnfläche der Dampflanze in Längsrichtung der Dampflanze ausgestoßen noch wird der Dampf und/oder die Luft aus der Mantelfläche in radialer Richtung ausgestoßen. Vielmehr führt der Auslassbereich den Dampf und/oder die Luft in eine Richtung mit einer tangentialen Bewegungskomponente in Bezug auf den Lanzenkörper der Dampflanze.

Dass Dampf und/oder Luft tangential aus dem Lanzenkörper strömt, bedeutet, dass die Strömungsrichtung des Dampfes und/oder der Luft senkrecht zu einer Längsachse oder Erstreckungsrichtung des Lanzenkörpers verläuft. Dabei strömt die Strömung mindestens abschnittsweise entlang der Mantelfläche, um eine kreisförmige oder spiralförmige Strömung anzudeuten bzw. herbeizuführen.

Die aus dem Auslassbereich austretende Strömung hat eine tangentiale Strömungsrichtung und strömt tangential aus dem Lanzenkörper und mindestens abschnittsweise um den Lanzenkörper. Dies bedeutet, dass die austretende Strömung mindestens eine Richtungskomponente hat, welche sich tangential um den Lanzenkörper erstreckt.

Das aus dem Auslassbereich austretende Fluid wird sich bei diesem Aufbau der Dampflanze typischerweise nicht vollständig linear bewegen, nachdem es den Auslassbereich verlassen hat. Vielmehr hat die in Umfangsrichtung des Lanzenkörpers gekrümmte bzw. konvexe Mantelfläche den Effekt, dass das Fluid mindestens teilweise und abschnittsweise dem Krümmungsverlauf der Mantelfläche in Umfangsrichtung folgt. Hierdurch wird auf vorteilhafte Weise unterstützt, dass in dem Behälter mit Milch ein Drall bzw. eine Rotation entsteht, was es ermöglicht, einen qualitativ hochwertigen Milchschaum zu erzeugen.

Ein solcher Drall bzw. eine solche Rotation kann nicht in demselben Maß erzeugt werden, wenn das Fluid den Auslassbereich geradlinig (in Längsrichtung oder in radialer Richtung des Lanzenkörpers) verlässt. Um mit einem geradlinig strömenden Fluid in dem Behälter mit Milch einen Drall zu erzeugen, ist es nötig, die Position des Behälters mit Bezug zu der Dampflanze manuell anzupassen und bei Bedarf zu justieren. Bei der hier beschriebenen Dampflanze ist der Auslassbereich so angeordnet, dass das austretende Fluid aufgrund der vorgegebenen tangentialen Strömungsrichtung und aufgrund der Tatsache, dass das austretende Fluid der Kontur der gekrümmten/konvexen Mantelfläche in Umfangsrichtung folgt, von sich aus einen Drall in dem Behälter mit Milch erzeugt.

Gemäß einer Ausführungsform enthält der Auslassbereich eine Öffnung, wobei die Öffnung so angeordnet ist, dass daraus strömender Dampf und/oder Luft mindestens abschnittsweise in Umfangsrichtung entlang der Mantelfläche strömt.

Gemäß einer weiteren Ausführungsform ist die Öffnung ein Schlitz oder eine Düse.

Der Auslassbereich kann auch mehrere solcher Öffnungen enthalten. Beispielsweise enthält der Auslassbereich mehrere Schlitze, wovon sich jeder in Längsrichtung des Lanzenkörpers erstreckt. Die mehreren Schlitze können in Umfangsrichtung nebeneinander angeordnet sein. Es ist aber auch denkbar, dass zwei oder mehrere Schlitze in Längsrichtung nebeneinander angeordnet und jeweils durch einen dünnen Steg voneinander getrennt sind. Der Auslassbereich kann auch mehrere Düsen enthalten, die in dem Auslassbereich über die Mantelfläche des Lanzenkörpers regelmäßig oder unregelmäßig verteilt sind. Es ist auch denkbar, dass in dem Auslassbereich Schlitze und Düsen verwendet werden. Beispielsweise können die Düsen ausgestaltet sein, Dampf abzugeben und die Schlitze können ausgestaltet sein, Luft einzubringen.

Gemäß einer weiteren Ausführungsform hat der Lanzenkörper einen kreisförmigen Querschnitt und der Auslassbereich erstreckt sich auf der Mantelfläche des Lanzenkörpers in Längsrichtung des Lanzenkörpers.

Üblicherweise bildet der Auslassbereich auf der Mantelfläche des Lanzenkörpers einen Bereich, der sich in Längsrichtung des Lanzenkörpers weiter erstreckt als in Umfangsrichtung des Lanzenkörpers. Der Grund für diesen Aufbau ist, dass hierdurch in der Milch in verschiedenen Tiefen eine kreisförmige Strömung um den Lanzenkörper erzeugt werden kann. Eine Dampflanze mit diesem Aufbau verursacht eine kreisförmige Strömung in einem Flüssigkeitsbehälter, wenn die Dampflanze in die Flüssigkeit eingetaucht wird und Dampf und/oder Luft aus dem Auslassbereich befördert wird.

Gemäß einer weiteren Ausführungsform weist die Dampflanze weiterhin einen Verschlussschieber auf, welcher in Längsrichtung des Lanzenkörpers bewegbar ist und so angeordnet ist, dass der Verschlussschieber einen variablen Bereich des Auslassbereichs abdeckt oder freigibt.

Der Verschlussschieber ist an oder in dem Lanzenkörper angeordnet. Beispielsweise ist der Verschlussschieber gleitend in dem Lanzenkörper gehalten, wie in einem Gleitlager oder dergleichen. Der Verschlussschieber kann in Längsrichtung des Lanzenkörpers bewegt werden und dabei einen Teil des Auslassbereichs abdecken. Damit wird der effektive Querschnitt oder die Anzahl der freien Öffnungen in dem Auslassbereich reduziert. Dies passiert insbesondere, wenn der Verschlussschieber in Richtung einer Stirnfläche des Lanzenkörpers bewegt wird. Indem der Verschlussschieber in Richtung der Stirnfläche bewegt wird, deckt er einen Teil des Auslassbereichs und der darin enthaltenen Öffnungen ab, so dass der Bereich des Auslassbereichs, aus welchem Dampf und/oder Luft austritt, verkleinert wird. So kann der Auslassbereich an einen Füllstand in einem Behälter angepasst werden, so dass Dampf und/oder Luft bevorzugt nur in dem Bereich des Auslassbereichs austritt, welcher in der Flüssigkeit steckt.

Gemäß einer weiteren Ausführungsform weist die Dampflanze weiterhin eine Betätigungsvorrichtung auf, wobei die Betätigungsvorrichtung mit dem Verschlussschieber mechanisch gekoppelt ist, damit der Verschlussschieber mittels der Betätigungsvorrichtung verschoben werden kann.

Die Betätigungsvorrichtung dient dazu, den Verschlussschieber in eine gewünschte Position zu bringen, damit aus dem Auslassbereich kein Dampf und/oder Luft oberhalb der Flüssigkeit austritt. Damit wird die Gesamtheit des Dampfes und/oder der Luft in die Milch eingebracht.

Gemäß einer weiteren Ausführungsform ist die Betätigungsvorrichtung ein Hebel oder ein Schwimmer.

Mittels der Betätigungsvorrichtung kann der Verschlussschieber in eine gewünschte Position geschoben werden. Dies kann beispielsweise mittels eines Hebels erfolgen, welcher manuell betätigt wird. Alternativ ist an der Dampflanze ein Schwimmer angeordnet, welcher mit dem Verschlussschieber mechanisch gekoppelt ist. Der Schwimmer ist ausgestaltet, auf einer Oberfläche einer Flüssigkeit zu schwimmen, so dass der Schwimmer relativ zu dem Lanzenkörper bewegt wird, wenn der Lanzenkörper tiefer oder weniger tief in eine Flüssigkeit eingetaucht wird. Bei dieser relativen Bewegung des Schwimmers zu dem Lanzenkörper wird auch der Verschlussschieber in dem Lanzenkörper bewegt und deckt einen größeren oder kleineren Bereich des Auslassbereichs ab. Somit kann erreicht werden, dass der Verschlussschieber sich in dem Auslassbereich an den Füllstand oder an die relative Position des Auslassbereichs zu der Flüssigkeit positioniert.

Der Verschlussschieber kann so mit dem Schwimmer gekoppelt sein, dass der Auslassbereich an dem Lanzenkörper erst ab einem gewissen Abstand unter der Oberfläche der Flüssigkeit freigegeben ist. In anderen Worten weist der Verschlussschieber entlang der Längsrichtung des Lanzenkörpers einen Versatz mit Bezug zu dem Schwimmer auf, so dass eine untere Kante des Verschlussschiebers näher an der Stirnseite des Lanzenkörpers ist als eine untere Kante des Schwimmers.

Gemäß einer weiteren Ausführungsform weist die Dampflanze eine erste Leitung und eine zweite Leitung auf, welche sich in einem Inneren der Dampflanze befinden und zu dem Auslassbereich erstrecken. Die erste Leitung ist ausgestaltet, Dampf zu dem Auslassbereich zu führen. Die zweite Leitung ist ausgestaltet, Luft zu dem Auslassbereich zu führen.

Mittels der ersten Leitung und der zweiten Leitung kann ein Dampf-Luft-Gemisch erzeugt werden, welches aus dem Auslassbereich in die umgebende Milch austritt.

Es ist auch denkbar, dass ein Dampf-Luft-Gemisch vor dem Auslassbereich erzeugt wird und mittels einer einzelnen Leitung an den Auslassbereich geführt wird.

Gemäß einem weiteren Aspekt ist eine Kaffeemaschine angegeben, welche ausgestaltet ist, ein Kaffeegetränk zu brühen. Die Kaffeemaschine weist eine Dampflanze wie hierin beschrieben auf.

Gemäß einem weiteren Aspekt ist ein System mit einer Kaffeemaschine wie hierin beschrieben und einem Behälter angegeben. Die Dampflanze ist ausgestaltet, in eine in dem Behälter befindliche Flüssigkeit eingetaucht zu werden und die eine Flüssigkeit mittels aus dem Auslassbereich der Dampflanze austretendem Dampf und/oder austretender Luft zu schäumen.

Die hier beschriebene Dampflanze für sich genommen und in Verbindung mit einer Kaffeemaschine oder einem System verbessert das Aufschäumen und Erwärmen von Milch dadurch, dass der Auslassbereich Dampf und/oder Luft in Umfangsrichtung um den Lanzenkörper in Strömung versetzt. Der dadurch entstehende Drall sorgt für eine gleichmäßige Verteilung der eingebrachten Luft in der Milch und verbessert die Qualität der geschäumten Milch. Das Erzeugen von Milchschaum ist mit der hier beschriebenen Geometrie der Dampflanze nahezu unabhängig von der Positionierung der Dampflanze in der Milch. Der Auslassbereich ist bevorzugt so ausgestaltet, dass alle darin angeordneten Öffnungen das Fluid in dieselbe tangentiale Strömungsrichtung ausstoßen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Systems mit einer Kaffeemaschine und einem Milchbehälter.
- Fig. 2: eine schematische Darstellung einer Dampflanze in einem Milchbehälter.
- Fig. 3: eine schematische Darstellung des Querschnitts einer Dampflanze.
- Fig. 4: eine schematische Darstellung des Querschnitts einer Dampflanze.
- Fig. 5: eine schematische Darstellung einer Dampflanze in einem Milchbehälter.
- Fig. 6: eine schematische Darstellung einer Dampflanze.
- Fig. 7: eine schematische Darstellung einer Dampflanze.
- Fig. 8: eine schematische Darstellung einer Dampflanze.
- Fig. 9: eine schematische Darstellung einer Dampflanze.
- Fig. 10: eine schematische Darstellung einer Dampflanze.
- Fig. 11: eine schematische Darstellung des Querschnitts einer Dampflanze.

### Detaillierte Beschreibung von Ausführungsbeispielen

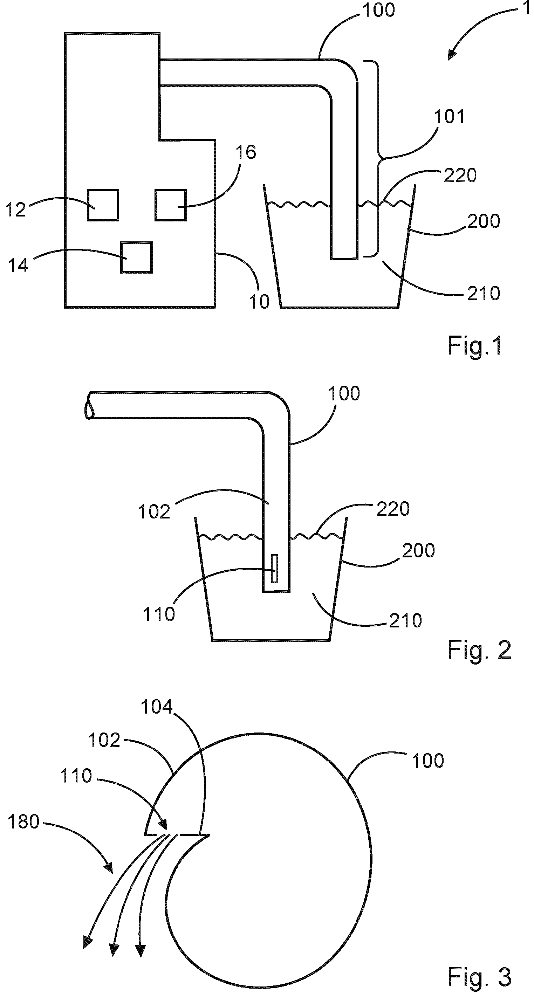

Fig. 1 zeigt ein System 1 mit einer Kaffeemaschine 10 und einem Behälter 200. Der Behälter 200 kann beispielsweise als Milchbehälter bezeichnet werden und enthält eine Flüssigkeit 210, welche in der Regel Milch ist. Die Flüssigkeit 210 ist in dem Behälter 200 bis zu einem Füllstand 220 gefüllt, wobei der Füllstand 220 gleichzeitig der Oberfläche der Flüssigkeit 210 entspricht. Von der Kaffeemaschine 10 sind vorliegend nicht sämtliche technischen Elemente für den Brühvorgang eines Kaffeegetränk gezeigt. Vielmehr sind lediglich einige derjenigen Elemente gezeigt, welche mit der Dampflanze 100 mittelbar oder unmittelbar funktional zusammenhängen.

Die Kaffeemaschine 10 weist einen Wasserbehälter 12, einen Boiler 14 und eine Pumpe 16 auf. In dem Wasserbehälter 12 wird Wasser für den Brühvorgang eines Kaffeegetränks und für die Erzeugung von Wasserdampf vorgehalten. In dem Boiler 14 wird Wasser aufgeheizt. Die Pumpe 16 befördert das Wasser oder den Wasserdampf zu der Dampflanze 100.

Die Dampflanze 100 ist an der Kaffeemaschine 10 starr oder bewegbar befestigt. Die Dampflanze 100 kann grundsätzlich auf beliebige Weise geformt sein. Die Dampflanze 100 weist einen Lanzenkörper 101 auf. Die Dampflanze 100 als Ganzes oder der Lanzenkörper sind bevorzugt aus Metall, beispielsweise einem Edelstahl, hergestellt. Andere Materialien können verwendet werden, beispielsweise Kunststoff oder Keramik, wobei die Art des Materials auf die Ausgestaltung der Dampflanze 100 und dem weiter unten beschriebenen Auslassbereich keinen direkten Einfluss hat.

Fig. 2 zeigt eine Dampflanze 100 mit der Mantelfläche 102 und dem auf der Mantelfläche 102 angeordneten Auslassbereich 110. Die Dampflanze ist in der Flüssigkeit 210 des Behälters 200 eingetaucht. Der Auslassbereich 110 ist vollständig in die Flüssigkeit 210 eingetaucht und befindet sich unterhalb der Oberfläche der Flüssigkeit zu 110.

Fig. 3 zeigt eine schematische Darstellung des Querschnitts der Dampflanze 100 in dem Bereich, in welchem sich der Auslassbereich 110 an der Mantelfläche 102 des Lanzenkörpers befindet. Dieser Darstellung ist zu entnehmen, dass der Querschnitt der Dampflanze im Wesentlichen kreisförmig ist und eine in Umfangsrichtung gekrümmte bzw. konvexe Mantelfläche hat. Die Dampflanze 100 kann eine radiale Einschnürung 104 aufweisen. In dieser radialen Einschnürung ist der Auslassbereich 110 angeordnet, so dass aus dem Auslassbereich 110 austretender Dampf und/oder Luft eine Strömung 180 hervorruft, welche eine Strömungskomponente in Umfangsrichtung bzw. tangentiale Richtung der Dampflanze hat.

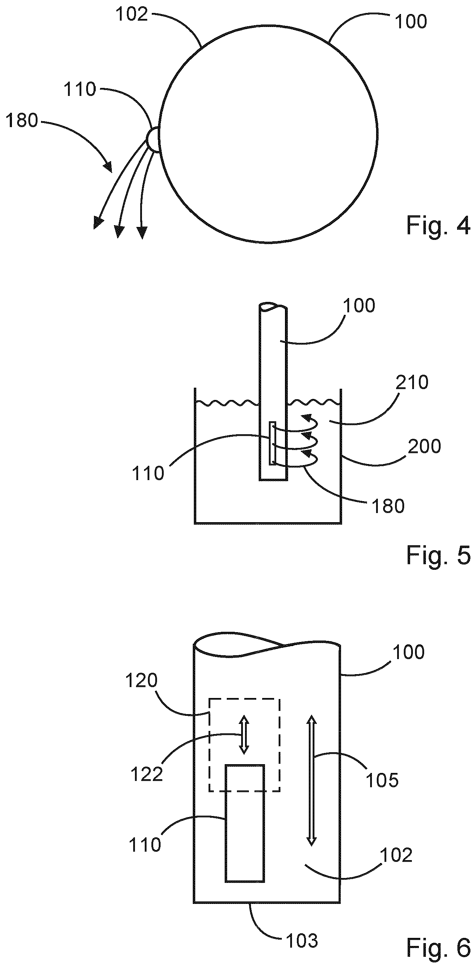

Fig. 4 zeigt eine schematische Darstellung des Querschnitts der Dampflanze 100 ähnlich zu Fig. 3, jedoch mit einem anders ausgestalteten Auslassbereich 110. Während der Auslassbereich 110 in Fig. 3 ein Schlitz ist, welcher sich in die Zeichenebene hinein erstreckt, ist der Auslassbereich 110 in Fig. 4 eine Düse, welche sich auf der Mantelfläche 102 der Dampflanze 100 befindet. Die Düse kann so ausgerichtet sein, dass sie ebenfalls eine Strömung 180 in Umfangsrichtung der Dampflanze 100 erzeugt.

Sowohl in Fig. 3 als auch in Fig. 4 folgt aus dem Auslassbereich 110 austretender Dampf und/oder Luft der konvexen Mantelfläche 102 der Dampflanze 100 und erzeugt in dem Behälter einen für die Bildung von Milchschaum vorteilhaften Drall.

Fig. 5 zeigt eine Dampflanze 100 in der Flüssigkeit 210 des Behälters 200. Der Auslassbereich 110 befindet sich vollständig in der Flüssigkeit 210, also unterhalb der Oberfläche der Flüssigkeit 210. Aus dem Auslassbereich 110 tritt Dampf und/oder Luft aus und wird in Umfangsrichtung um die Dampflanze 100 geführt, wie es die Pfeile für die Strömung 180 zeigen.

Fig. 6 zeigt eine Dampflanze 100 mit einem Auslassbereich 110 für Dampf und/oder Luft sowie einem Verschlussschieber 120. Der Verschlussschieber 120 kann entlang der Bewegungsrichtung 122 bewegt werden und dabei einen Teil des Auslassbereichs 110 verdecken oder freigeben, je nachdem in welche Richtung der Verschlussschieber 120 bewegt wird. Die Bewegungsrichtung 122 des Verschlussschiebers 120 entspricht bevorzugt der Längsrichtung 105 der Dampflanze 100.

In einem Ausgangszustand ist der Verschlussschieber 120 so positioniert, dass es keinen Überlapp zwischen Verschlussschieber 120 und Auslassbereich 110 gibt. In diesem Ausgangszustand ist der Verschlussschieber 120 von der Stirnseite 103 der Dampflanze 100 weiter entfernt, als dies in Fig. 6 gezeigt ist. In Fig. 6 wird ein Zwischenzustand gezeigt, in welchem der Verschlussschieber 120 den Auslassbereich 110 teilweise überdeckt. In einem Zustand der maximalen Überdeckung kann der Verschlussschieber 120 den gesamten Auslassbereich oder einen Großteil des Auslassbereichs 110 überdecken. Der Verschlussschieber 120 kann so ausgestaltet und angeordnet sein, dass er in dem Zustand der maximalen Überdeckung einen gewünschten Abschnitt des Auslassbereichs 110 abdeckt.

Im Ausgangszustand ist der Verschlussschieber 120 maximal von der Stirnseite 103 der Dampflanze 100 entfernt. In dem Zustand der maximalen Überdeckung ist der Verschlussschieber 120 näher an der Stirnseite 103.

Im Übrigen ist der Fig. 6 zu entnehmen, dass Dampf und/oder Luft bei der hier beschriebenen Dampflanze 100 aus der Mantelfläche 102 austritt und nicht aus der Stirnseite 103.

In Fig. 6 ist der Verschlussschieber 120 mit gestrichelten Linien gezeichnet, weil sich der Verschlussschieber 120 in diesem Beispiel innerhalb der Dampflanze 100 befindet. Beispielsweise kann der Verschlussschieber 120 sich in der Mantelfläche 102 der Dampflanze 100 befinden oder auf der Innenseite der Mantelfläche 102. Der Verschlussschieber 120 kann in oder an der Mantelfläche 102 gleitend gelagert sein, um die Bewegung 122 in Längsrichtung 105 der Dampflanze zu ermöglichen. Der Verschlussschieber 120 kann mit einer Dichtung (nicht gezeigt) gegenüber der Mantelfläche 102 abgedichtet sein.

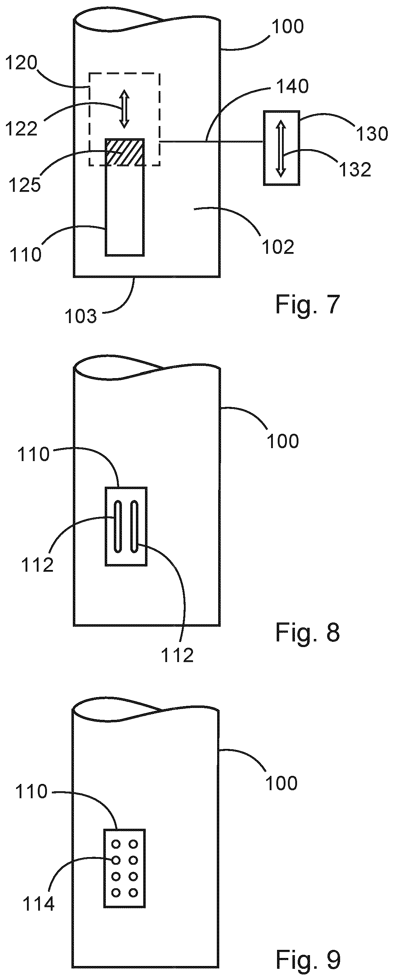

Fig. 7 zeigt beispielhaft, wie der Verschlussschieber 120 entlang der Richtung 122 mit Bezug zu der Dampflanze 100 bewegt werden kann, um einen abgedeckten Bereich 125 des Auslassbereichs 110 abzudecken oder freizugeben. Je weiter der Verschlussschieber 120 relativ zu der Mantelfläche 102 in Richtung der Stirnseite 103 bewegt wird, desto größer wird der abgedeckte Bereich 125 und desto kleiner wird der effektive Querschnitt der Öffnung des Auslassbereichs 110, aus welchem Dampf und/oder Luft austreten kann.

Der Verschlussschieber 120 ist über ein Gestänge 140 mit einer Betätigungsvorrichtung 130 verbunden. Die Betätigungsvorrichtung 130 befindet sich außerhalb der Mantelfläche 102 der Dampflanze 100. Die Betätigungsvorrichtung 130 kann entlang der Mantelfläche 102 wie von der Bewegungsrichtung 132 angezeigt bewegt werden. Die Betätigungsvorrichtung 130 ist mechanisch mit dem Verschlussschieber 120 gekoppelt. Sobald die Betätigungsvorrichtung 130 bewegt wird, bewegt sich der Verschlussschieber 120 relativ zu dem Auslassbereich 130.

Die Betätigungsvorrichtung 130 kann als manuell betätigbarer Hebel oder als Schwimmer ausgestaltet sein. Mittels der Betätigungsvorrichtung 130 kann die Größe des Auslassbereichs 110 an den Füllstand der Flüssigkeit in dem Behälter angepasst werden. Wenn die Betätigungsvorrichtung 130 als Schwimmer ausgestaltet ist, schwimmt sie auf der Oberfläche der Flüssigkeit in dem Behälter und bewegt den Verschlussschieber 120 in Abhängigkeit von dem Füllstand in eine entsprechende Position mit Bezug zu dem Auslassbereich 110.

Fig. 8 zeigt eine beispielhafte Ausgestaltung des Auslassbereichs 110 der Dampflanze 100. In dieser Variante enthält der Auslassbereich 110 zwei Schlitze 112 die sich in Längsrichtung der Dampflanze 100 erstrecken. Fig. 9 zeigt eine alternative Ausgestaltung des Auslassbereichs 110, in welcher der Auslassbereich 110 mehrere Düsen 114 aufweist. Die Schlitze 112 und die Düsen 114 sind so angeordnet und ausgestaltet, dass sie eine Strömung 180 (siehe Fig. 3 und Fig. 4) hervorrufen.

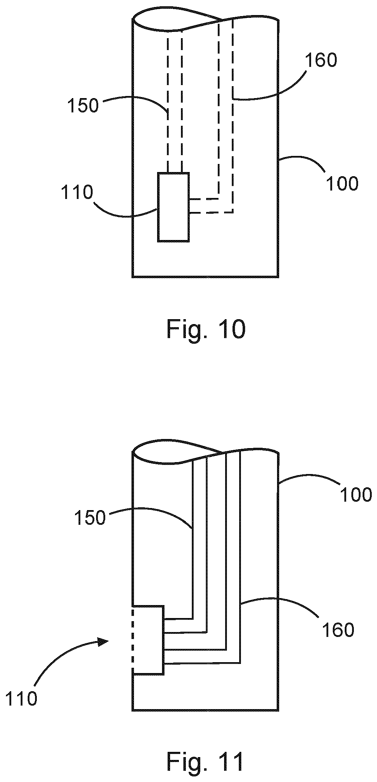

Fig. 10 zeigt schematisch die Versorgung des Auslassbereichs 110 der Dampflanze 100 mit Dampf und/oder Luft. In dem Inneren der Dampflanze 100 ist eine erste Leitung 150 und eine zweite Leitung 160 angeordnet. Die erste Leitung 150 ist beispielsweise eine Luftleitung und die zweite Leitung 160 ist beispielsweise eine Dampfleitung. Über diese beiden Leitungen 150, 160 wird wahlweise Dampf und/oder Luft zu dem Auslassbereich 110 geführt.

Die Art und die Menge sowie der Druck des dem Auslassbereich 110 zugeführten Fluids (Dampf und/oder Luft) kann über Eingabeelemente (nicht gezeigt) an der Kaffeemaschine 10 (siehe Fig. 1) eingestellt bzw. vorgegeben werden.

Fig. 11 zeigt eine Querschnittdarstellung der Dampflanze 100 aus Fig. 10. In Fig. 11 ist zu sehen, dass die erste Leitung 150 und die zweite Leitung 160 an den Auslassbereich 110 geführt werden, wo Dampf und/oder Luft in die Umgebung abgegeben werden.

Auch wenn in den Fig. 10 und 11 die erste Leitung 150 und die zweite Leitung 160 als gesonderte Leitungen in dem Innenraum der Dampflanze 100 dargestellt sind, so ist zu verstehen, dass Dampf und/oder Luft in voneinander getrennten Bereichen des Innenvolumens der Dampflanze 100 geführt werden können und dass hierfür nicht gesonderte Leitungen vorgesehen sein müssen. Es ist auch denkbar, dass ein Dampf-Luft-Gemisch über eine einzelne Leitung zu dem Auslassbereich 110 geführt wird, wenn dieses Gemisch erzeugt wird, bevor es der einzelnen Leitung zugeführt wird.

### Bezugszeichenliste

- 1: System
- 10: Kaffeemaschine
- 12: Wasserbehälter
- 14: Boiler
- 16: Pumpe
- 100: Dampflanze
- 101: Lanzenkörper
- 102: Mantelfläche
- 103: Stirnseite
- 104: radiale Einschnürung
- 105: Längsrichtung
- 110: Auslassbereich
- 112: Schlitz
- 114: Düse
- 120: Verschlussschieber
- 122: Bewegungsrichtung
- 125: abgedeckter Bereich
- 130: Betätigungsvorrichtung (Hebel, Schwimmer)
- 132: Bewegungsrichtung
- 140: Gestänge
- 150: erste Leitung, Dampfleitung
- 160: zweite Leitung, Luftleitung
- 180: Strömung
- 200: Behälter
- 210: Flüssigkeit
- 220: Füllstand

## Patentansprüche

1. Dampflanze (100) für eine Kaffeemaschine (10), aufweisend:
einen stabartigen Lanzenkörper (101);
einen Auslassbereich (110) zum Auslassen von Dampf und/oder Luft aus einem Inneren des Lanzenkörpers (101) in eine Umgebung des Lanzenkörpers (101);
wobei der Auslassbereich (110) an einer Mantelfläche (102) des Lanzenkörpers (101) angeordnet ist und ausgestaltet ist, den Dampf und/oder die Luft so auszulassen, dass der Dampf und/oder die Luft eine Strömung (180) bildet, welche in Bezug auf den Lanzenkörper eine tangentiale Strömungsrichtung hat und tangential aus dem Lanzenkörper (101) strömt;
**dadurch gekennzeichnet, dass**
die Mantelfläche (102) in Umfangsrichtung des Lanzenkörpers (101) gekrümmt ist;
der Auslassbereich (110) so ausgestaltet ist, dass die Strömungsrichtung des Dampfes und/oder der Luft senkrecht zu einer Längsachse oder Erstreckungsrichtung in Längsrichtung (105) des Lanzenkörpers (101) mindestens abschnittsweise entlang der Mantelfläche (102) verläuft;
der Auslassbereich (110) so ausgestaltet ist, dass die von dem Dampf und/oder der Luft gebildete Strömung (180) mindestens abschnittsweise um den Lanzenkörper (180) strömt und mindestens teilweise und abschnittsweise einem Krümmungsverlauf der Mantelfläche (102) in Umfangsrichtung folgt.

2. Dampflanze (100) nach Anspruch 1,
wobei der Auslassbereich (110) eine Öffnung enthält;
wobei die Öffnung so angeordnet ist, dass daraus strömender Dampf und/oder Luft mindestens abschnittsweise in Umfangsrichtung entlang der Mantelfläche strömt.

3. Dampflanze (100) nach Anspruch 2,
wobei die Öffnung ein Schlitz (112) oder eine Düse (114) ist.

4. Dampflanze (100) nach einem der voranstehenden Ansprüche,
wobei der Lanzenkörper (101) einen kreisförmigen Querschnitt hat und der Auslassbereich (110) sich auf der Mantelfläche (102) des Lanzenkörpers (101) in Längsrichtung (105) des Lanzenkörpers (101) erstreckt.

5. Dampflanze (100) nach einem der voranstehenden Ansprüche,
wobei die Dampflanze (100) weiterhin einen Verschlussschieber (120) aufweist, welcher in Längsrichtung (105) des Lanzenkörpers (101) bewegbar ist und so angeordnet ist, dass der Verschlussschieber (120) einen variablen Bereich (125) des Auslassbereichs (110) abdeckt oder freigibt.

6. Dampflanze (100) nach Anspruch 5,
wobei die Dampflanze (100) weiterhin eine Betätigungsvorrichtung (130) aufweist;
wobei die Betätigungsvorrichtung (130) mit dem Verschlussschieber (120) mechanisch gekoppelt ist, damit der Verschlussschieber (120) mittels der Betätigungsvorrichtung (130) verschoben werden kann.

7. Dampflanze (100) nach Anspruch 6,
wobei die Betätigungsvorrichtung (130) ein Hebel oder ein Schwimmer ist.

8. Dampflanze (100) nach einem der voranstehenden Ansprüche,
wobei die Dampflanze (100) eine erste Leitung (150) und eine zweite Leitung (160) aufweist, welche sich in einem Inneren der Dampflanze befinden und zu dem Auslassbereich (110) erstrecken;
wobei die erste Leitung (150) ausgestaltet ist, Dampf zu dem Auslassbereich (110) zu führen;
wobei die zweite Leitung (160) ausgestaltet ist, Luft zu dem Auslassbereich (110) zu führen.

9. Kaffeemaschine (10), welche ausgestaltet ist, ein Kaffeegetränk zu brühen;
wobei die Kaffeemaschine eine Dampflanze (100) nach einem der Ansprüche 1 bis 8 aufweist.

10. System (1), aufweisend:
eine Kaffeemaschine (10) nach Anspruch 9, und einen Behälter (200);
wobei die Dampflanze (100) ausgestaltet ist, in eine in dem Behälter (200) befindliche Flüssigkeit (210) eingetaucht zu werden und die eine Flüssigkeit (210) mittels aus dem Auslassbereich (110) der Dampflanze (100) austretendem Dampf und/oder austretender Luft zu schäumen.

## Claims

1. A steam distributor (100) for a coffee machine (10), comprising:
a rod-like lance body (101);
an outlet region (110) for discharging steam and/or air from an interior of the lance body (101) into an environment of the lance body (101);
wherein the outlet region (110) is arranged on a lateral surface (102) of the lance body (101) and is configured to discharge the steam and/or the air such that the steam and/or the air forms a flow (180) which has a tangential flow direction with respect to the lance body and flows tangentially out of the lance body (101);
**characterized in that**
the lateral surface (102) is curved in the circumferential direction of the lance body (101);
the outlet region (110) is configured such that the flow direction of the steam and/or of the air runs perpendicular to a longitudinal axis or direction of extent in the longitudinal direction (105) of the lance body (101) at least in sections along the lateral surface (102);
the outlet region (110) is configured such that the flow (180) formed by the steam and/or the air flows at least in sections around the lance body (180) and follows at least partially and in sections a curvature profile of the lateral surface (102) in the circumferential direction.

2. The steam distributor (100) according to claim 1,
wherein the outlet region (110) contains an opening;
wherein the opening is arranged such that steam and/or air flowing therefrom flows at least in sections in the circumferential direction along the lateral surface.

3. The steam distributor (100) according to claim 2,
wherein the opening is a slot (112) or a nozzle (114).

4. The steam distributor (100) according to any one of the preceding claims,
wherein the lance body (101) has a circular cross section and the outlet region (110) extends on the lateral surface (102) of the lance body (101) in the longitudinal direction (105) of the lance body (101).

5. The steam distributor (100) according to any one of the preceding claims,
wherein the steam distributor (100) further comprises a closure slide (120) which is movable in the longitudinal direction (105) of the lance body (101) and is arranged such that the closure slide (120) covers or releases a variable region (125) of the outlet region (110).

6. The steam distributor (100) according to claim 5,
wherein the steam distributor (100) further comprises an actuating device (130);
wherein the actuating device (130) is mechanically coupled to the closure slide (120) so that the closure slide (120) can be displaced by means of the actuating device (130).

7. The steam distributor (100) according to claim 6,
wherein the actuating device (130) is a lever or a float.

8. The steam distributor (100) according to any one of the preceding claims,
wherein the steam distributor (100) comprises a first conduit (150) and a second conduit (160) which are located in an interior of the steam distributor and extend to the outlet region (110);
wherein the first conduit (150) is configured to guide steam to the outlet region (110);
wherein the second conduit (160) is configured to guide air to the outlet region (110).

9. A coffee machine (10) configured to brew a coffee beverage;
wherein the coffee machine comprises a steam distributor (100) according to any one of claims 1 to 8.

10. A system (1), comprising:
a coffee machine (10) according to claim 9, and a container (200);
wherein the steam distributor (100) is configured to be immersed in a liquid (210) located in the container (200) and to foam the one liquid (210) by means of steam and/or air exiting from the outlet region (110) of the steam distributor (100).

## Revendications

1. Buse á vapeur (100) pour une machine à café (10), comprenant :
un corps de lance (101) en forme de tige ;
une zone de sortie (110) pour évacuer de la vapeur et/ou de l'air d'un intérieur du corps de lance (101) dans un environnement du corps de lance (101) ;
la zone de sortie (110) étant disposée sur une surface d'enveloppe (102) du corps de lance (101) et étant conçue pour évacuer la vapeur et/ou l'air de telle sorte que la vapeur et/ou l'air forme un écoulement (180) qui présente une direction d'écoulement tangentielle par rapport au corps de lance et s'écoule tangentiellement hors du corps de lance (101) ;
**caractérisée en ce que**
la surface d'enveloppe (102) est courbée dans la direction périphérique du corps de lance (101) ;
la zone de sortie (110) est conçue de telle sorte que la direction d'écoulement de la vapeur et/ou de l'air s'étend perpendiculairement à un axe longitudinal ou à une direction d'extension dans la direction longitudinale (105) du corps de lance (101) au moins en partie le long de la surface d'enveloppe (102) ;
la zone de sortie (110) est conçue de telle sorte que l'écoulement (180) formé par la vapeur et/ou l'air s'écoule au moins en partie autour du corps de lance (180) et suit au moins en partie et en partie un tracé de courbure de la surface d'enveloppe (102) dans la direction périphérique.

2. Buse à vapeur (100) selon la revendication 1,
dans laquelle la zone de sortie (110) contient une ouverture ;
dans laquelle l'ouverture est disposée de telle sorte que la vapeur et/ou l'air s'écoulant à partir de celle-ci s'écoule au moins en partie dans la direction périphérique le long de la surface d'enveloppe.

3. Buse à vapeur (100) selon la revendication 2,
dans laquelle l'ouverture est une fente (112) ou une buse (114).

4. Buse à vapeur (100) selon l'une quelconque des revendications précédentes,
dans laquelle le corps de lance (101) présente une section transversale circulaire et la zone de sortie (110) s'étend sur la surface d'enveloppe (102) du corps de lance (101) dans la direction longitudinale (105) du corps de lance (101).

5. Buse à vapeur (100) selon l'une quelconque des revendications précédentes,
dans laquelle la buse à vapeur (100) comprend en outre un coulisseau de fermeture (120) qui est mobile dans la direction longitudinale (105) du corps de lance (101) et est disposé de telle sorte que le coulisseau de fermeture (120) recouvre ou libère une zone variable (125) de la zone de sortie (110).

6. Buse à vapeur (100) selon la revendication 5,
dans laquelle la buse à vapeur (100) comprend en outre un dispositif d'actionnement (130) ;
dans laquelle le dispositif d'actionnement (130) est couplé mécaniquement au coulisseau de fermeture (120) pour permettre au coulisseau de fermeture (120) d'être déplacé au moyen du dispositif d'actionnement (130).

7. Buse à vapeur (100) selon la revendication 6,
dans laquelle le dispositif d'actionnement (130) est un levier ou un flotteur.

8. Buse à vapeur (100) selon l'une quelconque des revendications précédentes,
dans laquelle la buse à vapeur (100) comprend un premier conduit (150) et un deuxième conduit (160) qui sont situés à l'intérieur de la buse à vapeur et s'étendent vers la zone de sortie (110) ;
dans laquelle le premier conduit (150) est conçu pour guider de la vapeur vers la zone de sortie (110) ;
dans laquelle le deuxième conduit (160) est conçu pour guider de l'air vers la zone de sortie (110).

9. Machine à café (10) conçue pour préparer une boisson à base de café ;
dans laquelle la machine à café comprend une buse à vapeur (100) selon l'une quelconque des revendications 1 à 8.

10. Système (1), comprenant :
une machine à café (10) selon la revendication 9, et un récipient (200) ;
dans lequel la buse à vapeur (100) est conçue pour être immergée dans un liquide (210) se trouvant dans le récipient (200) et pour faire mousser le liquide (210) au moyen de vapeur et/ou d'air sortant de la zone de sortie (110) de la buse à vapeur (100).
